# EUROPEAN PATENT APPLICATION

(11) **EP 4 246 355 A1**
(43) Date of publication of application: **20.09.2023**
(21) Application number: 23158739.5
(22) Date of filing: 27.02.2023
(51) Int. Cl.: G06F 21/60, G06F 3/12, H04L 9/40, H04W 12/50

(54) **NON-NETWORKED MULTI-TENANT MULTI-FUNCTION DEVICES**

(30) Priority: 17.03.2022 US 202217655334
(71) Applicant: Xerox Corporation, Webster, NY 14580 (US)
(72) Inventor: DIOGUARDI, Timothy L., Webster, 14580 (US); LANG, Joseph H., Webster, 14580 (US); ROUHANA, Fadi G., Fairport, 14450 (US); VAN SCOOTER, Scott C., Chatham, 62629 (US); BROWN II, Paul F., Webster, 14580 (US)
(74) Representative: Gill Jennings & Every LLP

(57) **Abstract**

A non-networked multi-function device (MFD) is disclosed. For example, the non-networked MFD includes a communication interface to establish a communication session with a mobile endpoint device, a memory to store authentication information, and a processor. The processor is to receive a connection request from a mobile endpoint device, establish a connection with the mobile endpoint device, authenticate the mobile endpoint device via authentication information received from the mobile endpoint device that matches authentication information stored in the memory, provide available functions to the mobile endpoint device, receive a request from the mobile endpoint device to execute a function from the available functions, and execute the function.

## Description

The present disclosure relates generally to multi-function devices and relates more particularly to non-networked multi-tenant multi-function devices.

### BACKGROUND

Multi-function devices (MFDs) are devices that can perform a variety of different functions. MFDs can print, scan, copy, fax, email documents, and the like. MFDs can provide a variety of different options to perform the various job requests, such as different colors, different paper sizes, changing a print quality, changing a size of the image and/or text to be printed, stapling, collating, providing different email addresses, selecting which network storage service to send the scanned document to, and the like.

MFDs may be relatively expensive to purchase and maintain. Thus, in some instances, MFDs may be shared by different users. In other examples, companies or users may go to stores that offer pay-per-use MFDs rather than purchasing and maintaining an MFD.

### SUMMARY

According to aspects illustrated herein, there are provided a non-networked multi-function device (MFD) and a method for executing a job request on a non-networked MFD. One disclosed feature of the embodiments is a non-networked MFD that comprises a communication interface to establish a communication session with a mobile endpoint device, a memory to store authentication information, and a processor. The processor is to receive a connection request from a mobile endpoint device, establish a connection with the mobile endpoint device, authenticate the mobile endpoint device via authentication information received from the mobile endpoint device that matches authentication information stored in the memory, provide available functions to the mobile endpoint device, receive a request from the mobile endpoint device to execute a function from the available functions, and execute the function.

Another disclosed feature is a method for executing a job request on a non-networked MFD. The method executed by a processor of the non-networked MFD comprises receiving a connection request from a mobile endpoint device, establishing a connection with the mobile endpoint device, authenticating the mobile endpoint device via authentication information received from the mobile endpoint device that matches authentication information stored in a memory of the non-networked MFD, providing available functions to the mobile endpoint device, receiving a request from the mobile endpoint device to execute a function from the available functions, and executing the function.

### BRIEF DESCRIPTION OF THE DRAWINGS

The teaching of the present disclosure can be readily understood by considering the following detailed description in conjunction with the accompanying drawings, in which:
FIG. 1 illustrates a block diagram of an example multi-tenant environment with a non-networked MFD of the present disclosure;
FIG. 2 illustrates a block diagram of an example MFD of the present disclosure;
FIG. 3 illustrates an example interaction between a mobile device of a tenant in the multi-tenant environment and the non-networked MFD of the present disclosure;
FIG. 4 illustrates a flow chart for a method of executing a job request on a non-networked MFD of the present disclosure; and
FIG. 5 illustrates a high-level block diagram of an example computer suitable for use in performing the functions described herein.

To facilitate understanding, identical reference numerals have been used, where possible, to designate identical elements that are common to the figures.

### DETAILED DESCRIPTION

The present disclosure broadly discloses non-networked multi-tenant MFDs and a method for executing a job request on the non-networked MFD. As discussed above, MFDs are complex devices that may be expensive to purchase and maintain. In some instances, not all companies or small enterprises may want to purchase and maintain their own MFD on premise.

Some environments may include multiple tenants. For example, an office building may be shared by different businesses. Thus, it may be beneficial to share the cost of an MFD among the multiple businesses or tenants within the building. For example, the building manager or owner may buy the MFD and apportion a cost of the MFD to each business in the office building based on usage.

However, some businesses may not want to use a shared MFD due to privacy or security concerns. For example, most shared MFDs are connected to a network to provide authentication and tracking. However, MFDs connected to a public network may be open to hacking.

The present disclosure provides a non-networked MFD that can be used in multi-tenant environments or buildings. The security concerns can be alleviated since the MFD is not connected to a public network. Additional security can be provided as well, as the present disclosure requires a user to be in very close proximity to be in the building and near the MFD to use the MFD.

In one embodiment, each business or tenant can access the non-networked MFD using a mobile device. For example, a mobile device can include an application associated with the non-networked MFD. The application may allow the mobile device to connect to the non-networked MFD and provide authentication information that can be matched against stored authentication information in the non-networked MFD.

Usage rights associated with each business or tenant can be controlled by the information exchanged between the mobile device and the MFD. The mobile device may provide the available job functions for the user. Each business or tenant may have different available functions available to them on the non-networked MFD.

In one embodiment, the usage of each business or tenant can be tracked locally by the non-networked MFD, or usage information can be transmitted by the mobile device to an application server in the network via the application on the mobile device. Thus, usage of the non-networked MFD can be tracked for each business or tenant, and the cost can be apportioned appropriately.

Thus, the present disclosure alleviates potential network securities associated with MFDs that are connected to a network. In addition, the non-networked MFD of the present disclosure can still track and apportion costs to each business or user. In addition, the non-networked MFD can control which functions are available to each business or user via an application on a mobile device that communicates with the non-networked MFD. Lastly, the non-networked MFD may have more flexibility in terms of where it can be located, since the non-networked MFD does not need to be located near an Ethernet port or a wireless access point.

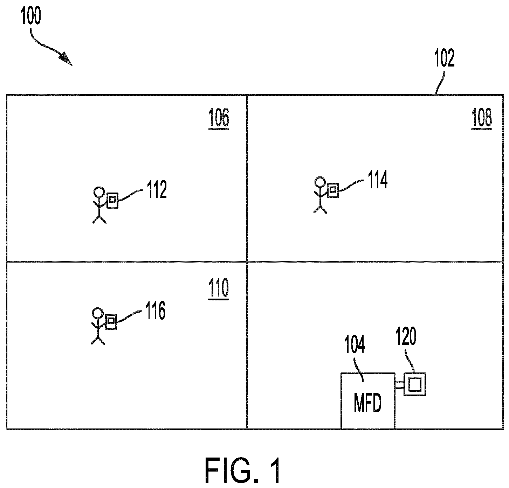

FIG. 1 illustrates a multi-tenant environment 100 of the present disclosure. In one embodiment, the multi-tenant environment 100 may include a building 102. The building 102 may be an office building, an apartment building, or any other location where multiple tenants, users, companies, and the like may share a non-networked multi-function device (MFD) 104.

In one embodiment, the building 102 may be an office building that is owned by an office manager. The building 102 may include a plurality of different companies 106, 108, and 110. Each company 106, 108, and 110 may have one or more employees or users with respective mobile devices 112, 114, and 116.

The office manager may purchase the non-networked MFD 104 to allow the employees of the companies 106, 108, and 110 to share the non-networked MFD 104. As discussed in further detail below, the non-networked MFD 104 may track usage by employees of each company 106, 108, and 110 so that the office manager may allocate the costs to each company 106, 108, and 110 for proportionate, respective use of the non-networked MFD 104.

In one embodiment, the non-networked MFD 104 may be disconnected from any network during operation in the multi-tenant environment 100. For example, the non-network MFD 104 is not connected to the Internet, a local Wi-Fi network, an Ethernet connection, and the like. Said another way, the non-networked MFD 104 may be free from any network connection interfaces (e.g., wired or wireless) or may temporarily have the network communications disabled while in operation or accessed by a mobile device 112, 114, or 116 of the employees or users in the multi-tenant environment 100.

In one embodiment, the non-networked MFD 104 may also be a single function device (SFD). For example, the SFD may perform a single function such as dedicated printing, dedicated copying, dedicated scanning, and the like. The non-networked MFD 104 may perform multiple different functions. For example, the non-networked MFD 104 may execute print jobs, copy jobs, scan jobs, and the like.

In one embodiment, the non-networked MFD 104 may include a display 120. The display 120 may normally be used to present a user interface such that a user may select jobs and parameters associated with the jobs. However, as discussed in further detail below, the present disclosure may authorize and track usage of the non-networked MFD 104 via the mobile endpoint devices 112, 114, and 116 of the employees of the different companies 106, 108, and 110. Thus, when one of the mobile endpoint devices 112, 114, or 116 is connected to the non-networked MFD 104, the non-networked MFD 104 may lock the user interface on the display 120 to force the user to send job requests via the mobile endpoint device 112, 114, or 116.

The mobile endpoint devices 112, 114, and 116 may be any type of mobile endpoint devices that can establish a local communication session with the MFD 104. For example, the mobile endpoint devices 112, 114, and 116 may include a mobile telephone, a smartphone, a tablet computer, and the like. The local communication session may be via near field communication (NFC), Bluetooth, WiFi Direct, and the like, or any combination thereof.

For example, NFC or Bluetooth radios may detect that the mobile endpoint device 112, 114, or 116 is near the MFD 104. In response, the MFD 104 may transmit short live connection details (e.g., a one-time password) for a WiFi Direct connection to a mobile endpoint device 112, 114, or 116 near the MFD 104. The WiFi Direct connection could then be turned on. The WiFi Direct connection could be turned off when the NFC or Bluetooth radios detect that the mobile endpoint device 112, 114, or 116 is no longer near the MFD 104.

It should be noted that the non-networked MFD 104 is not connected to any network. For example, the non-networked MFD 104 is not connected to a wired Ethernet connection and is not connected to any wireless network or access point. Thus, the only way to interact with the non-networked MFD 104 is locally through the user interface shown on the display 120 or via a local communication session with a mobile endpoint device 112, 114, or 116, as discussed in further detail below.

Moreover, since the non-networked MFD 104 is not connected to any network, the non-networked MFD 104 may be located anywhere in the multi-tenant environment 102. For example, the non-networked MFD 104 does not need to be located near an Ethernet port or an access point. The non-networked MFD 104 may be located somewhere that is equidistant from all of the companies 106, 108, and 110 in the multi-tenant environment 102.

Although three companies 106, 108, and 110 are illustrated in FIG. 1, it should be noted that any number of companies may be located in the building 102. Although a single employee with a single mobile endpoint device is illustrated in FIG. 1, it should be noted that each company 106, 108, and 110 may have many employees with their own respective mobile endpoint devices.

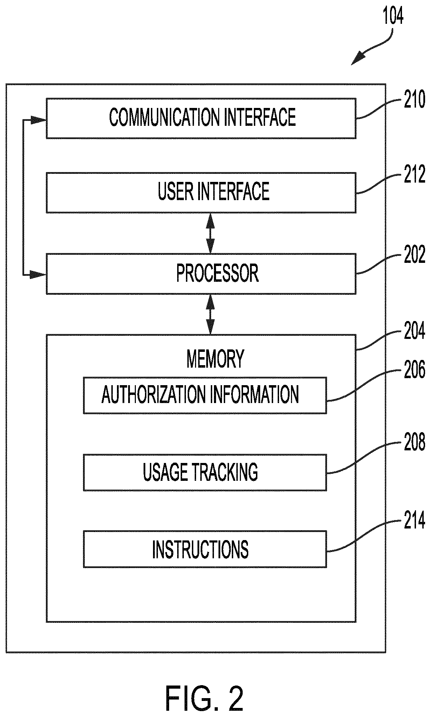

FIG. 2 illustrates a block diagram of an example of the non-networked MFD 104 of FIG. 1. In one embodiment, the non-networked MFD 104 may include a processor 202, a memory 204, a communication interface 210, and a user interface 212. The processor 202 may be communicatively coupled to the memory 204, the communication interface 210, and the user interface 212. The processor 202 may control operation of and/or transmit/receive data via the communication interface 210 and/or the user interface 212.

In one embodiment, the communication interface 210 may be to establish a local communication session between the non-networked MFD 104 and one of the mobile endpoint devices 112, 114, or 116 of FIG. 1. The communication interface 210 may be a wireless local communication interface. For example, the communication interface 210 may be an NFC interface or a Bluetooth interface. Thus, the communication interface 210 may establish the local communication session with one of the mobile endpoint devices 112, 114, or 116 when one of the mobile endpoint devices 112, 114, or 116 is near the communication interface 210 (e.g., within a distance threshold or within a proximity of the communication interface 210). For example, the communication interface 208 may establish the local communication session with one of the mobile endpoint devices 112, 114, or 116 that is located within range of the communication interface 210 (e.g., less 1 foot, less than 5 feet, less than 10 feet, and the like).

In one embodiment, the user interface 212 may be a graphical user interface (GUI). The user interface 212 may be a touch screen interface or may be a GUI that receives inputs via a keyboard, a mouse, a trackpad, and the like. The user interface 212 may be presented to a user via the display 120.

In one embodiment, the memory 204 may be any type of non-transitory computer readable medium. For example, the memory 204 may be a hard disk drive, a solid state drive, a random access memory, a read only memory, and the like. The memory 204 may store instructions 214.

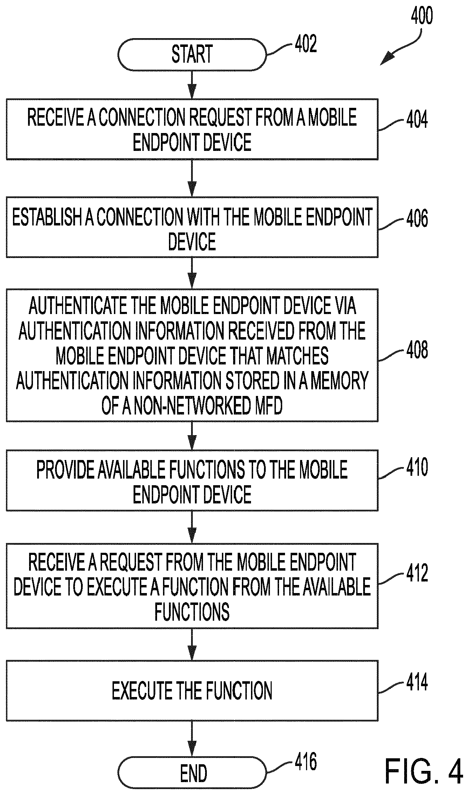

In one embodiment, the instructions 214 may be executed by the processor 202 to perform the functions described herein to execute a job request received from a mobile endpoint device 112, 114, or 116 on the non-networked MFD 104. The instructions 214 may cause the processor 202 to perform operations of the method 400 illustrated in FIG. 4, and discussed in further detail below. In one embodiment, the memory 204 may also store the authorization information 206 and usage tracking 208.

In one embodiment, the authorization information 206 may include information that can authenticate or authorize users via authorization information received from respective endpoint devices 112, 114, and 116. The authorization information 206 may include a username and password or a key. The key can be a symmetric key, an asymmetric key, or any other type of key. Although an example of authorization information 206 is described as a username and password, it should be noted that any type of authorization information 206 may be used.

The authorization information 206 may be for each individual user or for all users of one of the companies 106, 108 and 110. For example, a respective username and password or key may be assigned to each company 106, 108, and 110. Each company 106, 108, or 110 may then distribute their respective username and password or key to each employee within the company 106, 108, or 110.

In one embodiment, the username and password or key may be distributed via an application installed on the mobile devices 112, 114, and 116 of the employees. As discussed below, each mobile device 112, 114, and 116 may be used to authorize a user (e.g., unlocking the non-networked MFD 104 to allow for interaction and authenticating the credentials of the user) and to allow the user to interact with the non-networked MFD 104 via the application installed on the mobile device 112, 114, and 116.

In one embodiment, the authorization information 206 may also define what features can be accessed by each user or company on the non-networked MFD 104. For example, company 106 may subscribe to only printing services. The company 108 may subscribe to scanning and copying services. The company 110 may subscribe to all features available on the non-networked MFD 104.

The usage tracking 208 may locally store usage information by each company 106, 108 and 110. For example, each time a mobile endpoint device 112, 114, and 116 connects to the non-networked MFD 104 to execute a job function, the non-networked MFD 104 may track the usage (e.g., job functions that were executed and parameters associated with the job (e.g., color or black and white, a number of copies, which paper was used, and the like)). The usage tracking 208 may generate a report that can be provided to the office manager of the building 102. The office manager than may use the usage information in the report to bill each company 106, 108, and 110 for their respective usage of the non-networked MFD 104.

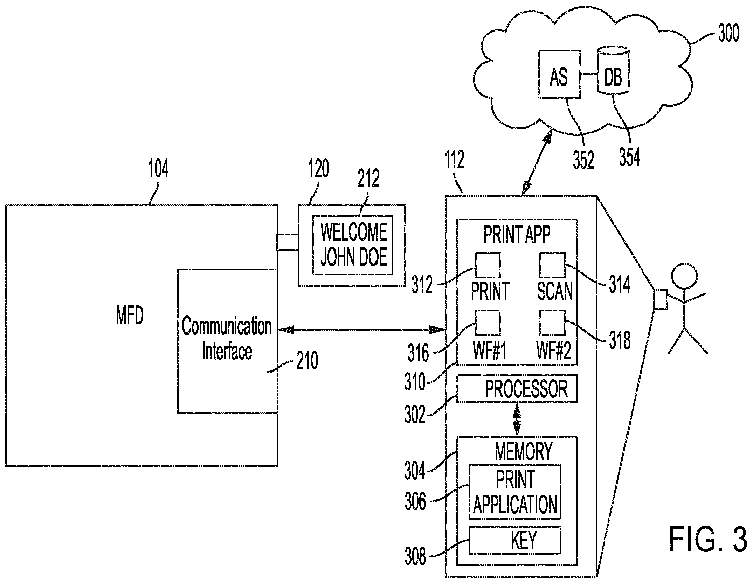

In one embodiment, the usage information may be tracked remotely. The mobile endpoint devices 106, 108, and 110 may be used to transmit usage information to a remote server, as illustrated in FIG. 3 and discussed below.

It should be noted that the non-networked MFD 104 has been simplified for ease of explanation and may include additional components that are not shown. For example, the non-networked MFD 104 may include a digital front end, a platen glass, an optical scanner, printheads (e.g., ink jet or laser), power supplies, paper trays, various finishing modules, and the like

FIG. 3 illustrates an example interaction between the non-networked MFD 104 of FIG. 1 and the mobile endpoint device 112 of an employee of the company 106 of FIG. 1. In one embodiment, an employee of the company 106 with the mobile endpoint device 112 may want to scan documents on the non-networked MFD 104. The mobile endpoint device 112 may include a graphical user interface (GUI) 310, a processor 302, and a memory 304. The memory 304 may store a print application 306, and a key or other authorization information 308. The key 308 may be provided by the company 106 when the employee downloads and installs the print application 306 on the mobile device 112.

In one embodiment, the employee may bring the mobile endpoint device 112 within range of the communication interface 210. In one embodiment, when the mobile endpoint device 112 is detected, the detection of the mobile endpoint device 112 may automatically unlock the user interface on the non-networked MFD 104 to allow the user to interact with the non-networked MFD 104 to provide credentials for authentication. In one embodiment, the non-networked MFD 104 may have a reader or scanner where the employee may place the mobile endpoint device 112 to be detected by the non-networked MFD 104. When the non-networked MFD 104 detects that the mobile endpoint device 112 is within range of the communication interface 210, the non-networked MFD 104 may establish a local communication session with the mobile endpoint device 112.

The non-networked MFD 104 may then request the key or authorization information 308 from the mobile endpoint device 112. The non-networked MFD 104 may then compare the key 308 to keys stored in the authorization information 206 in the memory 204 of the non-networked MFD 104. If the key 308 is found in the authorization information 206, the non-networked MFD 104 may authorize the mobile endpoint device 112.

In one embodiment, after the local communication session is established and the mobile endpoint device 112 is authenticated, the non-networked MFD 104 may lock the user interface 212. For example, the user interface 212 may simply display a message and hide all of the interface buttons. Thus, the employee may be limited to selecting options presented in the GUI 310 of the mobile endpoint device 112 and would not be able to bypass the subscription limitations by using the user interface 212 on the non-networked MFD 104.

In one embodiment, after the mobile endpoint device 112 is authenticated, the print application 306 may launch the GUI 310 on a display of the mobile endpoint device 112. The GUI 310 may present a list of icons 312, 314, 316, and 318 that can be selected by the employee. The icons 312, 314, 316, and 318 may represent what features the employee is allowed to access based on the subscription of services of the company 106. For example, the icon 312 may be a print function and the icon 314 may be a scan function.

The GUI 310 may also include workflows shown by the icons 316 and 318. Each work flow may be a series of steps and/or parameters for a particular function that are programmed by the employee or the company in advance. For example, an employee may frequently print 50 copies of a document in color and then scan one copy of the document in black and white. The workflow #1 (WF#1) represented by icon 316 may represent a shortcut to selecting all of these job functions and parameters. For example, the employee may simply select the icon 316, and all steps and parameters of the workflow would be automatically executed. For example, the non-networked MFD 104 would select color for the copies and generate 50 copies of the document, then select black and white for the scan and scan a single copy of the document. Thus, the multiple jobs and parameters for each job may be executed by a single selection of the icon 316.

It should be noted that although a particular screenshot of the GUI 310 is illustrated in FIG. 3, the GUI 310 may also present different screens to the employee. For example, after an icon 312 or 314 is selected, the GUI 310 may present additional screens with selectable parameters. For example, after icon 312 is selected to execute a print job, the GUI 310 may present a screen to allow the employee to select a color, a number of copies, a type of paper, various finishing options, and the like.

The employee may select the desired icons 312, 314, 316, and 318 to perform the desired jobs or workflows. In one embodiment, the non-networked MFD 104 may track usage locally in the usage tracking 208, as described above. In one embodiment, the usage can be tracked remotely by an application server (AS) 352 located in an Internet Protocol (IP) network 300. For example, the usage can be tracked via the print application 306. When the desired jobs are selected and executed, the print application 306 may transmit the usage information to the AS 352 via the network connection capability of the mobile endpoint device 112. The usage information can then be stored in a database (DB) 354 communicatively coupled to the AS 352.

In one embodiment, the AS 352 and DB 354 may be a network storage service provider. The employee may scan documents on the non-networked MFD 104, and the electronic file generated from scanning the document can be transmitted back to the mobile endpoint device 112. The electronic file can be saved locally on the mobile endpoint device 112, or the print application 306 may transmit the electronic file to be saved in the AS 352 or DB 354 of the network storage service provider using the account of the employee.

In one embodiment, documents to be printed may be accessed from the AS 352 and/or DB 354 of the network storage provider. For example, the print application 306 may access the user account of the employee and present a screen that represents files stored in the network storage service provider account of the employee. The user may then select the files to be printed and then select the icon 312 to print the selected files on the non-networked MFD 104.

It should be noted that although various icons 312, 314, 316, and 318 are illustrated in FIG. 3, other icons may also be shown on the GUI 310. In addition, different users may have different numbers of icons. For example, the mobile endpoint device 116 of an employee of the company 110 may have different icons on the GUI of the mobile endpoint device 116. For example, the company 110 may only subscribe to using the scan feature on the non-networked MFD 104. Thus, when the mobile endpoint device 116 is connected to the non-networked MFD 104, the GUI of the mobile endpoint deice 116 may only show the icon 314. In addition, the mobile endpoint device 116 may have three different workflow icons used by the company 110 that are not available on the mobile endpoint device 112.

In other words, the print application 306 may customize the icons that are available for each mobile endpoint device for each employee and/or company 106, 108 or 110 based on the subscribed services. Thus, each employee or each company may have different available icons that represent different available features or workflows from other employees or other companies.

To illustrate, the employee of company 106 may disconnect the mobile endpoint device 112 from the non-networked MFD 104. For example, the employee may choose an option to disconnect in the print application 306, or the mobile endpoint device 112 may be moved out of range of the communication interface 210 and the non-networked MFD 104 may disconnect the local connection. An employee of the company 108 may later bring the mobile endpoint device 114 near the non-networked MFD 104. As described above, the non-networked MFD 104 may establish a local connection with the mobile endpoint device 114 and authenticate the mobile endpoint device 114.

The print application 306 on the mobile endpoint device 114 may be executed to show a GUI 310 that has different icons than the icons 312, 314, 316, and 318 that were shown on the GUI 310 of the mobile endpoint device 112. For example, the GUI 310 of the mobile endpoint device 114 may only have icons 312 and 316 or may have additional icons for different workflows that were not shown in the GUI 310 of the mobile endpoint device 112.

In one embodiment, although the non-networked MFD 104 is described as not being connected to any network, it should be noted that being "non-networked" may be a selectable option. For example, the non-networked MFD 104 may be capable of being connected to a network, but may be disconnected from the network while in operation in the multi-tenant environment 100. The building manager may occasionally select to connect to the network (e.g., via a wired or wireless communication interface) to upload diagnostic information, download software updates, and the like. However, when the non-networked MFD 104 is deployed for use by the employees of the companies 106, 108, and 110, the network connection can be disabled. As a result, the non-networked MFD 104 may provide a secure user experience for the companies 106, 108, and 110, as no network is connected to the non-networked MFD 104 when jobs are being executed. Thus, information cannot be remotely hacked or stolen from the non-networked MFD 104.

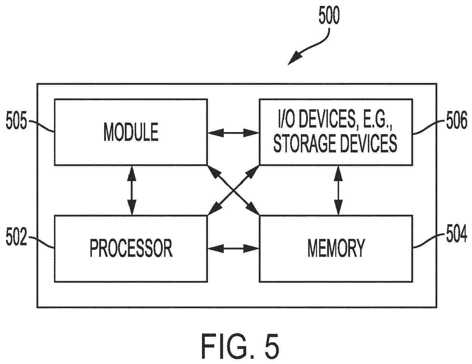

FIG. 4 illustrates a flow chart of an example method 400 for executing a job request on a non-networked MFD of the present disclosure. In one embodiment, the method 400 may be performed by the apparatus 104 or by an apparatus such as the apparatus 500 illustrated in FIG. 5 and discussed below.

In one embodiment, the method 400 begins at block 402. At block 404, the method 400 receives a connection request from a mobile endpoint device. For example, the request may be received by a non-networked MFD located in a multi-tenant building. The non-networked MFD may be owned by a single entity (e.g., the owner of the multi-tenant building or management company of the multi-tenant building), but shared by the various tenants or companies within the multi-tenant building.

In one embodiment, employees of the companies within the multi-tenant building may access or use the non-networked MFD with their respective mobile endpoint devices. An employee may walk up to the non-networked MFD such that their mobile endpoint device is within range of a communication interface of the non-networked MFD. The communication interface may be able to establish a local communication session using NFC or Bluetooth.

In one embodiment, the mobile endpoint device of the employee may be loaded with a print application associated with the non-networked MFD. The employee may launch the print application and bring the mobile endpoint device within range of the communication interface of the non-networked MFD. When within range, the mobile endpoint device may send a request to the non-networked MFD to establish a connection.

At block 406, the method 400 establishes a connection with the mobile endpoint device. For example, the non-networked MFD may establish a local connection, such as an NFC connection or a Bluetooth connection. In other words, if the mobile endpoint device is moved out of range of the communication interface of the non-networked MFD, the connection may be terminated or disconnected.

At block 408, the method 400 authenticates the mobile endpoint device via authentication information received from the mobile endpoint device that matches authentication information stored in a memory of the non-networked MFD. In one embodiment, the mobile endpoint device of the employee may be authenticated after the local communication session or connection is established.

For example, each employee may establish a username and password or receive a unique key. In one embodiment, each company within the multi-tenant building may receive a respective username and password or a respective key, and each company may distribute the respective username and password or the respective key to its employees. In one embodiment, the key may be stored in the mobile endpoint device as part of the installation process of the print application on the mobile endpoint device.

After the connection is established in block 406, as described above, the non-networked MFD may request authorization information from the mobile endpoint device. The mobile endpoint device may provide authorization information (e.g., a username and password, a key, or any other types of authorization information). The non-networked MFD may compare the authorization information received from the mobile endpoint device to the authorization information stored in the memory of the non-networked MFD. The authorization information stored in the memory of the non-networked MFD may be stored in memory when the authorization information is created for each company and/or assigned to each company. If a match is found, the mobile endpoint device may be authenticated.

At block 410, the method 400 provides available functions to the mobile endpoint device. For example, each authorization information stored in the memory of the non-networked MFD may also include a list of authorized features for the company or employee. The information may be transmitted to the mobile endpoint device. The print application on the mobile endpoint device may then configure the GUI of the print application to include selectable options to execute the authorized features for the company or employee. In one embodiment, the GUI may also include workflows that are saved by the user or by the company, as described above.

In one embodiment, the non-networked MFD may lock a local user interface on a display of the non-networked MFD. For example, the display of the non-networked MFD may simply remove all of the selectable icons and display a message to the user while the mobile endpoint device is connected to the non-networked MFD. As a result, the user may be limited to selecting jobs and parameters for the jobs via the GUI of the print application on the mobile endpoint device. This may allow the non-networked MFD to track usage by each company or employee. As described above, the tracked usage can be summarized in a report that the owner of the non-networked MFD may use to apportion costs to each company based on their respective usage.

At block 412, the method 400 receives a request from the mobile endpoint device to execute a function from the available functions. For example, the user may select a job with the desired parameters or a workflow from the GUI of the print application on the mobile endpoint device. The selection may be transmitted to the non-networked MFD.

In one embodiment, the print application may access an account on a cloud storage service provider via a network connection of the mobile endpoint device. The user may retrieve a file from the cloud storage service provider and provide the file to the non-networked MFD to execute the function (e.g., print the selected electronic file).

At block 414, the method 400 executes the function. For example, the non-networked MFD may execute the function, such as a print job, a scan job, a copy job, and the like. In one embodiment, the electronic files generated by a scan job may be transmitted back to the mobile endpoint device for storage via the local communication session. The mobile endpoint device may then save the electronic file locally on the mobile endpoint device or transmit the electronic file for storage in an account associated with a cloud storage service provider.

As discussed above, each GUI of the print application for different employees of different companies may be different. For example, after the function is executed in block 414, the employee may disconnect the connection and leave the non-networked MFD. At a later time, another employee may arrive at the non-networked MFD with a second mobile endpoint device. The second employee may work for a second company of the multi-tenant building that is different from the company of the previous employee.

The non-networked MFD may receive a second connection request from the second mobile endpoint device, establish a second connection with the second mobile endpoint device, and be authenticated, as described above.

The second employee may have different authorized functions and/or workflows. The non-networked MFD may provide or transmit the authorized functions and/or workflows to the second mobile endpoint device. As a result, the available selections or icons on the GUI of the print application on the second mobile endpoint device may be different from the selections or icons that were available on the GUI of the print application of the previous mobile endpoint device. Thus, the non-networked MFD may still control access and subscriptions to various functions or features for different subscribers/companies/employees even though the non-networked MFD is not connected to a network or to a remote authentication server.

The second employee may then select an available function or workflow from the GUI. The selection may be transmitted to the non-networked MFD. The non-networked MFD may then execute the selected function or workflow. The process may be repeated for each different employee of different companies within the multi-tenant building that access the non-networked MFD. At block 416, the method 400 ends.

FIG. 5 depicts a high-level block diagram of a computer that is dedicated to perform the functions described herein. As depicted in FIG. 5, the computer 500 comprises one or more hardware processor elements 502 (e.g., a central processing unit (CPU), a microprocessor, or a multi-core processor), a memory 504, e.g., random access memory (RAM) and/or read only memory (ROM), a module 505 for executing a job request on a non-networked MFD, and various input/output devices 506 (e.g., storage devices, including but not limited to, a tape drive, a floppy drive, a hard disk drive or a compact disk drive, a receiver, a transmitter, a speaker, a display, a speech synthesizer, an output port, an input port and a user input device (such as a keyboard, a keypad, a mouse, a microphone and the like)). Although only one processor element is shown, it should be noted that the computer may employ a plurality of processor elements.

It should be noted that the present disclosure can be implemented in software and/or in a combination of software and hardware, e.g., using application specific integrated circuits (ASIC), a programmable logic array (PLA), including a field-programmable gate array (FPGA), or a state machine deployed on a hardware device, a computer or any other hardware equivalents, e.g., computer readable instructions pertaining to the method(s) discussed above can be used to configure a hardware processor to perform the steps, functions and/or operations of the above disclosed methods. In one embodiment, instructions and data for the present module or process 505 for executing a job request on a non-networked MFD (e.g., a software program comprising computer-executable instructions) can be loaded into memory 504 and executed by hardware processor element 502 to implement the steps, functions or operations as discussed above. Furthermore, when a hardware processor executes instructions to perform "operations," this could include the hardware processor performing the operations directly and/or facilitating, directing, or cooperating with another hardware device or component (e.g., a co-processor and the like) to perform the operations.

The processor executing the computer readable or software instructions relating to the above described method(s) can be perceived as a programmed processor or a specialized processor. As such, the present module 505 for executing a job request on a non-networked MFD (including associated data structures) of the present disclosure can be stored on a tangible or physical (broadly non-transitory) computer-readable storage device or medium, e.g., volatile memory, non-volatile memory, ROM memory, RAM memory, magnetic or optical drive, device or diskette and the like. More specifically, the computer-readable storage device may comprise any physical devices that provide the ability to store information such as data and/or instructions to be accessed by a processor or a computing device such as a computer or an application server.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A non-networked multi-function device (MFD), comprising:
a communication interface to establish a local communication session with a mobile endpoint device;
a memory to store authentication information; and
a processor to:
receive a connection request from the mobile endpoint device;
establish a connection with the mobile endpoint device via the local communication session;
authenticate the mobile endpoint device via authentication information received from the mobile endpoint device that matches the authentication information stored in the memory;
provide available functions to the mobile endpoint device;
receive a request from the mobile endpoint device to execute a function from the available functions; and
execute the function.

2. The non-networked MFD of claim 1, wherein the communication interface comprises a near field communication interface, a Bluetooth radio, or a WiFi Direct connection, or wherein the communication interface comprises a combination of two or more of: a near field communication interface, a Bluetooth radio, or a WiFi Direct connection.

3. The non-networked MFD of claim 1, wherein the authentication information comprises a username and password.

4. The non-networked MFD of claim 1, wherein the authentication information comprises a key associated with a tenant of a multi-tenant building where the MFD is located.

5. The non-networked MFD of claim 1, wherein the processor is further to:
disconnect the connection with the mobile endpoint device after the function is executed;
receive a second connection request from a second mobile endpoint device;
establish a second connection with the second mobile endpoint device via a second local communication session;
authenticate the second mobile endpoint device via authentication information received from the second mobile endpoint device that matches the authentication information stored in the memory;
provide available functions for the second mobile endpoint to the second mobile endpoint device, wherein the available functions for the second mobile endpoint device are different from the available functions for the mobile endpoint device that was previously connected;
receive a request from the second mobile endpoint device to execute a function from the available functions for the second mobile endpoint device; and
execute the function from the available functions for the second mobile endpoint device.

6. The non-networked MFD of claim 1, wherein the processor is further to:
track usage for different users; and
generate a usage report for the different users.

7. The non-networked MFD of claim 1, wherein the processor is further to:
lock a local user interface on the MFD while the connection with the mobile endpoint device is established.

8. The non-networked MFD of claim 1, wherein the available functions comprise job functions and workflows created by a user of the mobile endpoint device.

9. A method, comprising:
receiving, via a process of a non-networked multi-function device (MFD), a connection request from a mobile endpoint device;
establishing, via the processor, a connection with the mobile endpoint device;
authenticating, via the processor, the mobile endpoint device via authentication information received from the mobile endpoint device that matches authentication information stored in a memory of the non-networked MFD;
providing, via the processor, available functions to the mobile endpoint device;
receiving, via the processor, a request from the mobile endpoint device to execute a function from the available functions; and
executing, via the processor, the function.

10. The method of claim 9, wherein the connection comprises a near field communication session, a Bluetooth radio, or a WiFi Direct connection, or wherein the connection comprises a combination of two or more of: a near field communication interface, a Bluetooth radio, or a WiFi Direct connection.

11. The method of claim 9, wherein the authentication information comprises a username and password.

12. The method of claim 9, wherein the authentication information comprises a key associated with a tenant of a multi-tenant building where the MFD is located.

13. The method of claim 9, further comprising:
detecting, via the processor, that the mobile device is out of range of a communication interface of the MFD;
disconnecting, via the processor, the connection with the mobile endpoint device,
the method optionally further comprising:
receiving, via the processor, a second connection request from a second mobile endpoint device;
establishing, via the processor, a second connection with the second mobile endpoint device;
authenticating, via the processor, the second mobile endpoint device via authentication information received from the second mobile endpoint device that matches authentication information stored in the memory;
providing, via the processor, available functions for the second mobile endpoint device to the second mobile endpoint device, wherein the available functions for the second mobile endpoint device are different from the available functions for the mobile endpoint device that was previously connected;
receiving, via the processor, a request from the second mobile endpoint device to execute a function from the available functions for the second mobile endpoint device; and
executing, via the processor, the function from the available functions for the second mobile endpoint device.

14. The method of claim 9, further comprising:
tracking, via the processor, usage for different users; and
generating, via the processor, a usage report for the different users.

15. The method of claim 9, further comprising:
locking, via the processor, a local user interface on the MFD while the connection with the mobile endpoint device is established.

16. The method of claim 9, wherein the available functions comprise job functions and workflows created by a user of the mobile endpoint device.

17. A non-networked multi-function device (MFD), comprising:
a communication interface to establish a local communication session with a mobile endpoint device;
a memory to store authentication information associated with a plurality of different tenants of a multi-tenant office building where the MFD is located; and
a processor to:
receive a connection request from a first mobile endpoint device associated with a first tenant of the plurality of different tenants;
establish a first connection with the first mobile endpoint device;
authenticate the first mobile endpoint device via first authentication information received from the first mobile endpoint device that matches authentication information associated with the first tenant stored in the memory;
provide available functions associated with the first tenant to the first mobile endpoint device;
receive a first request from the first mobile endpoint device to execute a first function from the available functions associated with the first tenant;
execute the first function;
disconnect the first connection;
receive a second connection request from a second mobile endpoint device associated with a second tenant of the plurality of different tenants;
establish a second connection with the second mobile endpoint device;
authenticate the second mobile endpoint device via second authentication information received from the second mobile endpoint device that matches authentication information associated with the second tenant stored in the memory;
provide available functions associated with the second tenant to the second mobile endpoint device, wherein the available functions associated with the first tenant are different from the available functions associated with the second tenant;
receive a request from the second mobile endpoint device to execute a second function from the available functions associated with the second tenant; execute the second function.
